# EUROPEAN PATENT SPECIFICATION

(11) **EP 2 512 738 B1**
(45) Date of publication and mention of the grant of the patent: **30.03.2016**
(21) Application number: 10808948.3
(22) Date of filing: 08.12.2010
(51) Int. Cl.: B24C 9/00, B24C 7/00

(54) **SYSTEM AND METHOD FOR BLASTING OBJECTS WITH A MIXTURE OF LIQUID AND ABRASIVE.**
SYSTEM UND VERFAHREN ZUM STRAHLEN VON OBJEKTEN MIT EINER MISCHUNG AUS FLÜSSIGKEIT UND SCHLEIFMITTEL
SYSTÈME ET PROCÉDÉ POUR SABLER DES OBJETS AVEC UN MÉLANGE DE LIQUIDE ET D'ABRASIF

(30) Priority: 18.12.2009 NL 1037571
(43) Date of publication of application: 24.10.2012
(73) Proprietor: Lasbedrijf Vink B.V., 4191 MX Geldermalsen (NL)
(72) Inventor: VINK, Gerardus Anthonius, NL-4185 NB Est (NL)
(74) Representative: Klooster, Jan Hanri
(86) International application number: PCT/NL2010/000167
(87) International publication number: WO 2011/074944

(56) References cited:
- EP-A1- 0 122 928
- EP-A2- 1 034 891
- WO-A1-2005/063441
- GB-A- 2 198 975
- US-A- 5 827 114
- US-A1- 2007 093 179
- US-B1- 6 224 463

## Description

The present Invention refers to a system for blasting objects, via at least one blasting head, with a blasting medium which is constituted by a blasting fluid, comprising a mixture of a transport liquid, e.g. water, and an abrasive material which is mainly not soluble in that transport liquid, wherein the blasting fluid comprises more than 40%, preferably between 70% and 90% and more preferably about 80% abrasive material, where the blasting fluid is supplied to the relevant blasting head via a blasting fluid inlet and where furthermore air or any other gas or gas mixture under high pressure is supplied to the blasting head via a gas inlet, which gas is combined with the blasting fluid thus constituting the blasting medium which is squirted with force to the object, where the blasting fluid is collected via collecting means and stored in storage means in order to be used for the blasting again. Moreover, the invention refers to a method for blasting objects, via at least one blasting head, with a blasting medium.

From US5827114 a seemingly similar system is known. In that system as a blasting fluid a liquid (e.g. water) is used as a transport liquid, which is saturated with a substance which is soluble in that liquid, e.g. sodium bicarbonate, where as an abrasive material sodium bicarbonate in crystalline form is added. It does not dissolve in the transport liquid, as (and as long as) it is saturated with sodium bicarbonate. As a result of that, those (not dissolved) sodium bicarbonate crystals in the blasting fluid perform a good abrasive effect on the objects to be treated. Surplus blasting fluid is collected in an infundibular collection reservoir which also acts as a storage reservoir for the blasting fluid. Part of the blasting fluid is directed into a settling and recrystallization tank, via which pollution originated by the blasting process, can be drained. In that tank -under influence of a suitable temperature-recrystallization/crystal growth of part of the sodium bicarbonate occurs, by which -supplemented with fresh crystals from the outside- the percentage of crystalline (thus abrasive) material is kept at the required level. The blasting fluid reconditioned in the settling and recrystallization tank is mixed with the remaining blasting fluid via a supply line which debouches at the below side of the storage reservoir.

A substantial difference between the system known from US5827114 and the system of the present patent application lies in the fact that in the latter system use is made of a blasting fluid which is constituted from a (transport) liquid and an abrasive material that -contrary to the known system- is not soluble in that liquid, due to which, all the more where the system according to the present application should be thought to be a system which is suitable for blasting objects especially (however, not exclusively) made from e.g. stainless steel having sizes which may range from some to many metres, at several locations in such a (large) installation measures are to be taken causing that under all operating conditions it will be prevented that the -after all insoluble- abrasive may settle such that the system is getting out of order. Besides, it has proven to be of great Importance that the (high) concentration abrasive in the blasting fluid, especially in the storage/supply reservoir from which the blasting fluid is supplied, has a high degree of homogeneity, causing that -besides that it is prevented that the system can be clogged- the very high surface quality reached by the blasting process, is constant, also for large objects.

From US6224463 a system is known for blasting, via a blasting head, objects with a blasting medium consisting of a blasting fluid which comprises a mixture of a transport liquid (water) and an abrasive material which is not soluble therein. The blasting fluid is collected and fed into a funnel-shaped liquid separator in which the collected blasting fluid is guided via a settling circuit including partitions, from which, at the bottom side, fluid ("slurry") having a very high abrasive concentration, is tapped, which is fed back to the blasting head via a low pressure slurry pump. Water having a minimal abrasive concentration is collected at the top side, which collected water, via a further settling and filtering circuit -in which all abrasive is removed- is fed back to the inlet of a very powerful high pressure water pump. The outlet of this powerful water pump is connected to the high pressure inlet of the blasting head. By means of a venturi effect in the blasting head the high pressure water ("compressed water") impels the low pressure slurry (having a high abrasive concentration) with force to the object to be blasted. In this known system the blasting force is determined by the force of the compressed water. Conversely, in the present invention high pressure air ("compressed air") -however having a much lower pressure than the pressure of the compressed water in the known system- is used to accelerate the blasting fluid and to squirt it with force to the object to be blasted.

It is noted that the use of compressed air for accelerating and "atomizing" blasting fluid is known as such from US5827114 (and US5384990), where it is used, however, in a system where a material is used as an abrasive, especially sodium bicarbonate, that is soluble in the transport liquid (as long as it is not already saturated with sodium bicarbonate).

Owing to the technical design choice made in the system known from US6224463 to accelerate the slurry -containing a high rate of abrasive material- by means of a very powerful water jet, in that known system use had to be made by a very powerful water pump having a working pressure of (as mentioned) of 7,000 to 20,000 psi (about 400 - 1400 bars). This kind of pumps, however, are completely unsuitable for pumping (under such high pressure) water mixed with abrasive material, as, at such high pressure, the abrasive material would cause serious wear and damage in such pump. For that reason in the known system it was chosen to separate the blasting fluid to be recycled, on the one hand, into a flow of highly concentrated (with abrasive material) blasting fluid ("slurry") and, on the other hand, into a flow of liquid from which all abrasive material has been removed (recycled compressed water). After said separation both flows are (re)combined in the blasting head, viz. the highly concentrated slurry flow and the (driving/accelerating) compressed water flow.

EP0122928 - Keizers, published 31 October 1984, shows a method and pressure container for sand blasting with wet sand by applying a propellant like compressed air. The blasting fluid of EP0122928 is not collected and recycled, therefore the arrangement of EP0122928 is not suitable for reliably blasting (large) objects with a constant surface quality and surface (roughness) condition by maintaining a homogeneous and constant high abrasive concentration.

GB2198975 - McColl, published 29 June 1988, also shows a method and an apparatus for wet abrasive blasting with a sand and water mixture accelerated by compressed air. The blasting fluid of GB2198975 is not collected and recycled, therefore the arrangement of GB2198975 Is not suitable for reliably blasting (large) objects with a constant surface quality and surface (roughness) condition by maintaining a homogeneous and constant high abrasive concentration.

Where, in the known system, use is made of an abrasive emulsion of grinded silicon carbide having a granular size of 400-1200 grit (about 15-35 µm) that, accelerated by compressed water with a very high pressure (about 500 bars or higher), the invention is based on the observations that application of an abrasive material, e.g. glass or sand, having a rather large granular size of about between 50 and 200 µm, in a blasting fluid having a pressure of max. about 10 - 20 bars, together with compressed air of max. about 10 bars, results in blasted products, especially products of stainless steel, of which the blasted surface has a quality that exceeds the quality of products which are blasted with known commercial systems.

The system aimed by the invention is especially intended to be suitable for blasting -preferably inside a large blasting cabin- relatively large objects, especially made of stainless steel, where severe requirements are to be fulfilled w.r.t. to the resulting surface condition, both in aesthetic sense and in technical sense, especially concerning the surface roughness. Concerning the last point, the roughness of blasted objects which, e.g., are used in the process and/or food industry, has, on one hand, to be low causing that it is not possible that bacteria will "nestle". However, on the other hand, the blasted surface may also not be so smooth (i.e. the roughness so low) that pollutions will attach to the surface owing to adhesion. The present invention thus aims -and with great success as has been proven from practical results already obtained- to provide that the surface condition of especially stainless steel products does not, on the one hand, become too rough and, on the other hand, become too smooth by the blasting process. Besides, also other materials can be treated with success.

Additional to the already mentioned disclosures, US2007093179 and WO2005063441 could be mentioned. However, those disclosures are less relevant than the disclosures discussed in the foregoing.

According to the invention a system is provided for blasting objects as indicated in the introductory part, wherein
- the collecting means include a collecting floor and a collection reservoir, where the collecting floor is arranged for collecting the blasting fluid and transporting the collected blasting fluid to the collection reservoir,
- the storage means include a storage reservoir and homogenizing means for storing and/or supplying blasting fluid having a mainly homogeneous and constant constitution, and
- a first pumping circuit is provided, arranged for pumping the collected blasting fluid towards the storage reservoir,
- a second pumping circuit is provided, arranged for pumping the mainly homogeneous blasting fluid from the storage reservoir to the (at least one) blasting head,
- wherein the storage means comprise a third pumping circuit, arranged for circulating and/or keeping in motion the blasting fluid in the storage reservoir such that the blasting fluid in the storage reservoir keeps a mainly homogeneous constitution.

As already mentioned, in the system according to the invention it is preferred to use a blasting fluid having a relative high content of abrasive material. Preferably the blasting fluid comprises more than 40(vol.)%, more preferably between 70 and 90% and still more preferably about 80% abrasive material,

All various (optional) separate components or subsystems of the system, either individually or, preferably, in combination with each other, make an important contribution to the realization of the aims of the system according to the invention, viz. providing a system which is able to blast with great reliability products having a constant and very high surface quality.

Some components will be discussed in brief hereinafter. The invention will be elucidated thereafter on the basis of an exemplary embodiment.

Preferably, the storage means comprise a (third) pumping circuit, which is arranged for pumping and/or keeping in motion the blasting fluid in the storage reservoir such that it is achieved that the blasting fluid in the storage reservoir has always a homogeneous constitution and a constant abrasive concentration. In this connection it is noted that from US6224463, discussed in the preceding, application of a bypass channel is known for preventing blockage of the bottom outlet of the funnel-shaped liquid separator via which the slurry with very high concentration abrasive has to be fed back to the blasting head in order to be mixed there with highly compressed water, which bottom outlet otherwise would be blocked by the abrasive material due to the very high concentration abrasive material and the low circulation speed of the slurry. In the system according to the present invention, however, there is no liquid separator via which highly concentrated slurry has to be drained away. On the contrary, during the blasting process the storage/supply reservoir in the system according to the invention is to be filled with blasting fluid having a homogeneous constitution and a constant concentration abrasive, which homogeneous blasting fluid is fed, in that constitution, from the storage reservoir to the blasting head, in order to be accelerated there by the compressed air supplied to the blasting head.

Preferably, the third pumping circuit comprises a pump of which the inlet is connected to the storage reservoir at a first location of the storage reservoir and an outlet at a second location of the storage reservoir, which first and second location are chosen such that during operation of the pump a circulation, flow and/or whirl of the blasting fluid in and/or through the storage reservoir Is achieved, such that it is achieved that the blasting fluid in the storage reservoir always has a homogeneous constitution and correct abrasive concentration.

The system according to the invention and its preferred embodiments are specially arranged to carry out a method according to the invention for blasting objects, via at least one blasting head, with a blasting medium, which method includes:
- providing a blasting fluid comprising a mixture of a transport liquid, e.g. water, and an abrasive material which is mainly not soluble in that transport liquid,
- supplying said blasting fluid to a relevant blasting head and supplying pressurized gas of gas mixture to the blasting head and combining the pressurized gas or gas mixure with the blasting fluid to form said blasting medium,
- first treating an object to be blasted with the blasting medium, wherein the pressurized gas or gas mixture is under a first pressure; and
- subsequently treating the object to be blasted with the blasting medium, while lowering the pressure of the pressurized gas or gas mixture to a second pressure which is lower than the first pressure.

Preferably, the blasting fluid is collected and homogenized in order to provide that said blasting fluid has a mainly homogeneous and constant constitution when supplied to a relevant blasting head again.

Hereinafter the system according to the invention will be elucidated further by means of a discussion of a preferred embodiment.
- Figure 1: schematically shows a preferred embodiment of the system according to the invention;
- Figure 2: shows the same preferred embodiment as figure 1, however, including some alternative details;
- Figures 3a-c: show a preferred embodiment of the system according to the invention as may be installed in a housing which is very well fit for that system.

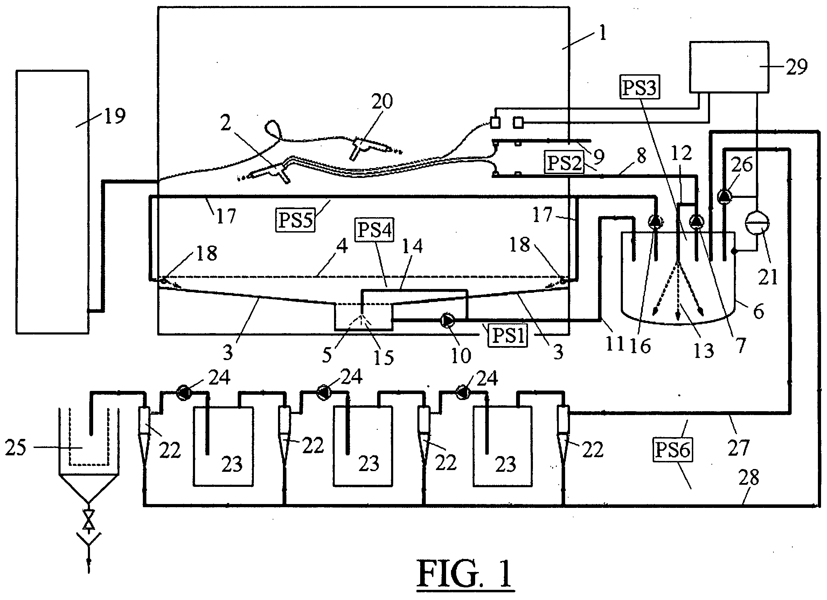

Figure 1 shows an at least partially closed -for protecting the environment against the blasting fluid and for collecting the blasting fluid- space 1, in which objects (not shown) can be blasted with a mixture of a liquid and an abrasive material that is not soluble in the transporting liquid, e.g. finely divided glass with a grain size of about 50 - 200 µm, hereinafter called the blasting fluid. The blasting fluid during the blasting of an object is squirted via a blasting head 2 against (or on) the object in question, said blasting fluid being energized and accelerated by compressed air, which is also supplied to the blasting head 2 from a compressed air hose 9. The blasting head 2 (or "blast gun" or "blast pistol") can be operated by a person located in the blasting chamber 2, who is preferably wearing a water-tight suit and water-tight helmet, since the blasting fluid is blasted forcefully against the object (or objects). The blasting fluid, after being blasted against the object, is collected by collecting means and buffered in storage means in order to be used again for blasting.

The collecting system includes, in the exemplary embodiment shown in Figure 1, a more or less funnel-shaped collecting floor 3, extending essentially over the bottom side of the chamber. Alternative models are possible, In which case one will strive for a sufficient slope (drop) and, further, to minimize the overall height of the floor in connection with the architectural features if the system is built as a stationary system or in connection with the total height if the system is built in a mobile version, for example in a container or a truck. Above the collecting floor a flat, grating-shaped floor 4 is installed for both the objects to be blasted and for the operator(s). The collecting system also includes a collection reservoir 5.

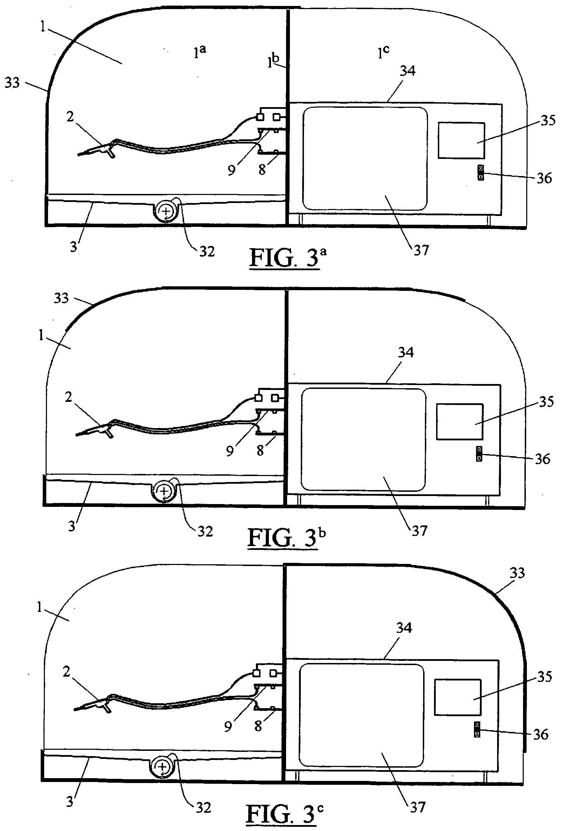

It should be clear that the slope and therefore the height of the funnel-shaped or otherwise shaped (descending) collecting floor 3 and the height of the collection reservoir 5 may be important for placing the objects to be blasted on the shop floor 4, especially if they are large and/or heavy objects. One option is to "bury" the collecting floor 3 and the collection reservoir 5 so that the work floor 4 adjoins e.g. a driving floor, where the objects can be brought inside the blasting compartment via an access door. A preferred configuration for installing a system according to the invention is shown in Figures 3a-c, where even very large objects to be blasted can be brought into the inside and out of the outside of the blasting compartment 1 in a convenient way.

The collecting floor 3 is arranged for collecting the blasting fluid and, due to the slope and/or by other means, e.g. one or more screw conveyers and/or slide chutes installed on the collecting floor, to feed the collected blasting fluid to the collection reservoir 5. It should also be clear here that, due to the high content of abrasive material in the blasting fluid -as a result of which excellent blasting results are obtained-, it is important to feed the collected abrasive effectively and efficiently to the collection reservoir 5, an aspect that will be discussed in more detail below.

The collecting means include a first pump circuit PS1, arranged for pumping the blasting fluid from the collection reservoir 5 to the above-mentioned storage means, i.e. by means of a pump 10 through a conduit 11 to a storage reservoir 6 that is arranged for storing and supplying the blasting fluid for the blasting process having a homogeneous composition and constant abrasive concentration. A second pump circuit PS2 is arranged for pumping by means of a pump 7 the blasting fluid from the storage reservoir 6 to the connections 8 to which one or more blasting heads 2 can be connected.

The storage means, including, among others, the storage reservoir 6, also include a third pump circuit PS3, designed for pumping round/circulating the blasting fluid in the storage reservoir 6 and keeping it in motion so that the blasting fluid in the storage reservoir 6 maintains a homogeneous composition and constant abrasive concentration. The third pump circuit PS3 may make use of the same pump 7 as that which pumps blasting fluid from the storage reservoir 6 to the blasting head 2. Via a bypass (conduit) 12 a portion of the blasting fluid is pumped back into the storage reservoir 6, said bypass 12 being so dimensioned and located that a turbulence 13 occurs in the blasting fluid in the storage reservoir 6, which keeps the abrasive material (insoluble in the liquid) in constant motion, thus assuring the maintenance of homogeneity of the blasting fluid.

From pump 7 an inlet is connected at a first location of the reservoir 6 and an outlet at a second location in the storage reservoir 6, the first and second locations being selected such that during operation of the pump an effective flow and turbulence of the blasting fluid in and/or through the storage reservoir is achieved.

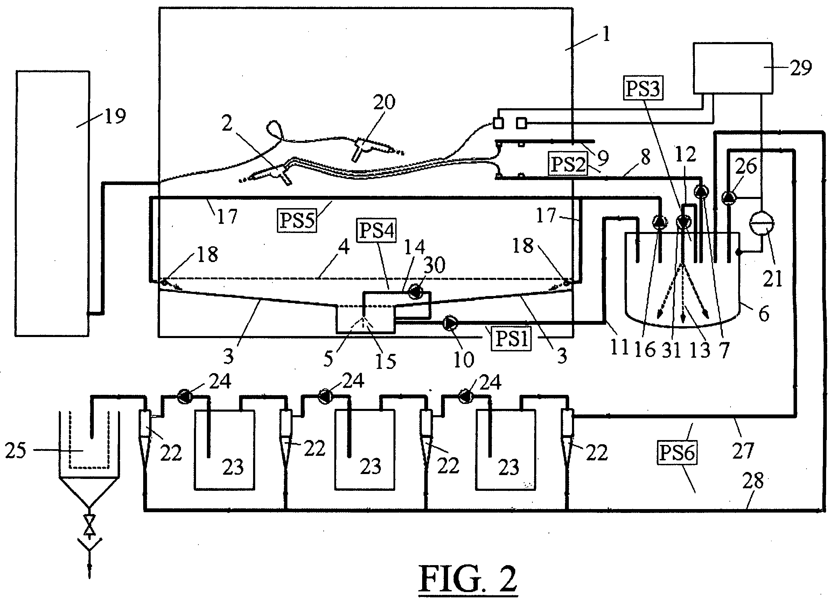

The second pump circuit PS2 and the third pump circuit PS3 can use a common pump, e.g. pump 7. However, if desired, separate pumps can also be used, as shown in Figure 2, i.e. pump 7 belonging to PS2, for pumping the blasting fluid from the reservoir 6 to the blasting guns 2, and a separate pump 31 belonging to PS3 for causing circulation and turbulence of the abrasive in the reservoir 6 for homogenization of the blasting fluid.

A similar configuration is also implemented in the previously mentioned collection reservoir 5 which is part of the collecting means. The collecting means therefore may include, besides the collection reservoir 5, a fourth pump circuit PS4, arranged for pumping round and keeping the blasting fluid in the collection reservoir in motion which prevents settling/precipitation of the abrasive in the collection reservoir. The circulation of part of the blasting fluid in the collection reservoir 5 is accomplished by the above-mentioned pump 10 via a bypass 14, which opens in the collection reservoir 5 and is so dimensioned and located that turbulence 15 occurs in the blasting fluid collected in the collection reservoir 5, securing that the abrasive material is also kept moving there and does not settle (which could cause the pump 10 to fall). From the pump 10 an inlet is connected to the collection reservoir 5 at a first location of the collection reservoir 5 and an outlet at a second location of the collection reservoir, the first and second locations being chosen such that during operation of the pump, a turbulent flow of the blasting fluid In and/or through the collection reservoir is realized.

The first pump circuit PS1 and the fourth pump circuit PS4 may use a common pump, i.e. pump 10. However, here also, if desired, separate pumps may be used, as shown in Figure 2, i.e. pump 10 belonging to PS1, for pumping the blasting fluid with an essentially constant abrasive concentration to the storage reservoir 6 and a separate pump 30 belonging to PS4, to cause turbulence of the abrasive in the collection reservoir 5.

The collecting means, including the collecting floor 3, may contain a fifth pump circuit PS5, which is arranged for pumping round (circulating) and keeping the blasting fluid in the collection reservoir 5 and/or reservoir 6 in motion via the collecting floor to prevent settling of the abrasive on the collecting floor. By means of a pump 16, a portion of the blasting agent in the storage reservoir 6 is pumped round via the collecting floor 3, specifically fed by means of pipes 17 and, for example, by spraying devices 18, distributed over the surface of the collecting floor 3 so that an additional stream of blasting fluid washes over the surface of the collecting floor 3, thereby preventing impermissible increase in the concentration and/or settlement of abrasive material. By the spray nozzles 18 the blasting fluid fed to the surface of the collecting floor 3 as well as the blasting fluid collected via the object being blasted is collected in the collection reservoir 5 and fed by pump 10 and pipeline 11 to the storage reservoir 6.

Figure 1 also shows rinsing means consisting of a reservoir 19 with (heated) distilled water, a pump (not shown) and a nozzle 2, arranged for rinsing, with a solution that corresponds to the transporting fluid of the blasting fluid -usually water with or without additives is used-, an object placed in the compartment, before and/or after it is blasted with the blasting fluid. This rinsing of the object feeds additional liquid into the system, which is therefore added to the blasting fluid, causing that the liquid/abrasive material ratio of the blasting fluid changes and the abrasive concentration decreases, and causing that the system at some point would "flood over" by the additional water supplied from outside. For this reason, the system includes means for discharging liquid, arranged to remove, from an excess of blasting fluid, at least a substantial portion of the abrasive material and return it to the system, while discharging the unnecessary amount of liquid. The liquid discharge means include a sixth pump circuit PS6, which is arranged to pump a surplus of blasting fluid (more generally, a portion of it), under the control of a level sensor 21, to separation means arranged to separate and return at least a substantial portion of the surplus of abrasive materials present via the sixth pump circuit PS6 to the system and to discharge the remaining liquid. The separation system in the embodiment shown in Figure 1 includes a number of cascaded cyclone separators 22, buffer tanks 23, pumps 24 and a filtration system 25, through which contaminants are separated and removed and the excess of (purified) water is also drained off. The cascades 22 - 25 are fed via a pump 26 controlled by the sensor 21 through a feed line 27. Via a return line 28 the recovered abrasive material Is returned to the storage reservoir and re-included in the process.

In practice, it appears that the ratio between the volume/pressure of the blasting fluid and that of the compressed air, which are mixed with each other in the blasting nozzle 2 and form the blasting medium there, influence the abrasive effect. If a lot of compressed air (compressed air under high pressure) is used, the abrasive effect is stronger but also more aggressive than with a little compressed air (under a lower pressure). Use can be made of this fact by first treating an object to be blasted with blasting medium with (blasting fluid and) high-pressure compressed air. In this way the product Is forcefully and effectively cleaned of surface contaminants, etc. After the object has thus been (essentially) cleaned, the pressure of the compressed air is lowered (gradually or in steps), so that the blasting medium acts less aggressively on the surface of the object and has a more polishing effect on it. The pressure of the blasting fluid may be raised then in some degree. Both approaches result in an object having a surface that Is thoroughly cleaned and a surface of excellent quality, both visually/esthetically and from the bacterial aspect also (see above). Adjusting the air/blasting fluid ratio can be accomplished by one or more adjustable valves or cutoff valves on the blasting nozzle 2 or by control of a system controller 9, e.g. using an operating device mounted on or near the blasting nozzle 2 (not shown), connected to the system controller 29, by means of which the air pressure and blasting fluid pressure can be regulated.

It will be focused now on methods that should preferably be utilized when starting the system, during operation, i.e., during the blasting of an object and when stopping or interrupting the process. In this case, the entire system can be controlled by means of the control module 29.

When shutting the system down, first the pump 7 is stopped so that no more liquid is supplied to the blasting nozzle. The compressed air is also cut off. Then the pump 16 and finally the pump 10 -after the collection reservoir 5 has been pumped empty- is switched off so that the blasting fluid is essentially located in the storage reservoir 6 and the abrasive material will settle after a certain time has passed. If desired, the pump 31 shown in Figure 2 can remain switched on keeping the blasting fluid (and the abrasive material) in storage reservoir 6 in motion so that its composition and abrasive concentration remains homogeneous. In addition, the feed line/hose for blasting head 2 and blasting head 2 itself may be rinsed/flushed with clean water. Also -if necessary- additional lines, hoses, etc. of the system may be flushed with water so that the abrasive material is removed. Flushing of important lines and hoses can also be accomplished at the time of (re)starting of the installation and/or, if desired, also intermediately, e.g. when changing the objects to be blasted.

In the same manner as, e.g. rinsing blasted objects with (distilled) water as in the (last) step in the process, in the case of flushing of the pipes, hoses, blasting heads, etc. when stopping, pausing, and/or initiating the process additional water gets -via the collecting means- into the system (and into the blasting fluid). However, the surplus of liquid (i.e. water) is -under control of the level sensor 21 and the control module 29- removed via the above discussed liquid discharge system, including the system components 22 to 28.

Finally, In Figures 3a-c a preferred variant is shown of the system shown in Figures 1 or 2, which is installed in a housing that is highly suitable for that system. This preferred configuration is also suitable for carrying large and/or heavy objects into the inside of the blasting compartment 1 (e.g. by means of a hoist) and removing them after the blasting treatment. Figures 3a-c show the above discussed blast head 2, the collecting floor 4 as well as the connection sockets 8 and 9 for the blasting fluid and compressed air respectively.

The collecting floor 4 in this embodiment is provided with one or more conveyer screws, in Figures 3a-c represented by a screw conveyer shown in cross-section 32, for feeding the collected blasting fluid to the (not explicitly shown) collection reservoir. The (bottom) part of the collecting floor in which the conveyer screws 32 are installed can also serve as (part of the) collection reservoir from which the collected blasting fluid is pumped to the storage reservoir (not shown here). About the measures for homogenization and mobilization of the blasting fluid in the different parts of the system reference is made to the foregoing.

The blasting compartment 1 is shown in cross section In Figures 3a-c, the most important components of which, in addition to the already mentioned collecting floor 4, are two sidewalls 1a, one of which is visible in the figures, as well as a rear wall 1b. The whole assembly is closed/sealed on the front and top side by a rolling shutter 33 that extends over the entire width (perpendicular to the plane of the figure) of the blasting compartment 1 and can be slid with its side edges along the sidewalls 1a as shown in the figures. The sidewalls 1a extend farther behind the rear wall 1b than the extended sidewalls 1c. The rolling shutter 33, e.g. driven by an electric motor, can be pushed all the way up and to the rear in the manner illustrated by Figure 3a, 3b and 3c. The rolling shutter 33 therefore can -facilitated by the round transition between the front and upper edge of the sidewalls 1a and the upper and rear edge (right) of the side walls 1c- be pushed over the sidewalls 1a and 1c, as a result of which the blasting compartment 1 can be fully opened on the front and top side and subsequently fully closed again. In order to put smaller/lighter objects into the blasting compartment 1, it is usually sufficient to slide the rolling shutter 33 up until only the front (left) edge is open, as shown in Figure 3b. Heavier and/or larger objects can be hoisted by means of a hoist or tackle (not shown) Installed at the ceiling of the production facility in which the complete and independent blasting module may be installed, into the blasting compartment 1 after the roll shutter 33 is slid all the way up as is shown in Figure 3c. After this, the rolling shutter 33 is slid back, which closes the blasting compartment 1 and the blasting treatment of the object can be started.

The blasting fluid and compressed air lines 8 and 9, the blasting head 2 and possibly the (not shown) control devices are located inside the blasting compartment 1, while the other equipment of the system, such as -see Figures 1 or 2- the pumps, the storage reservoir, etc., is installed in a totally closed housing 34 which is accessible through an access hatch 37 by authorized personnel only. The system can be switched on and off by means of a main switch 36 and be initiated, set and controlled by means of (e.g.) touch screen 35.

## Claims

1. System for blasting objects, via at least one blasting head, with a blasting medium which is constituted by a blasting fluid comprising a mixture of a transport liquid, e.g. water, and an abrasive material which is mainly not soluble in that transport liquid, wherein the blasting fluid comprises more than 40%, preferably between 70% and 90% and more preferably about 80% abrasive material, where the blasting fluid is supplied to a relevant blasting head via a blasting fluid inlet and where, furthermore, gas of gas mixture under high pressure is supplied to the blasting head via a gas inlet, which gas is combined with the blasting fluid thus constituting the blasting medium, which blasting medium is squirted with force to the object, where the blasting fluid is collected via collecting means and stored in storage means in order to be used for the blasting again, wherein
- the collecting means include a collecting floor (3) and a collection reservoir (5), where the collecting floor is arranged for collecting the blasting fluid and transporting the collected blasting fluid to the collection reservoir,
- the storage means include a storage reservoir (6) and homogenizing means for storing and/or supplying blasting fluid having a mainly homogeneous and constant constitution,
- a first pumping circuit (PS1) is provided, arranged for pumping the collected blasting fluid towards the storage reservoir, and
- a second pumping circuit (PS2) is provided, arranged for pumping the mainly homogeneous blasting fluid from the storage reservoir to the at least one blasting head,
- wherein the storage means comprise a third pumping circuit (PS3), arranged for circulating and/or keeping in motion the blasting fluid in the storage reservoir such that the blasting fluid in the storage reservoir keeps a mainly homogeneous constitution.

2. System according to claim 1, wherein the third pumping circuit (PS3) comprises a pump (7) of which the inlet is connected at a first location of the storage reservoir and an outlet at a second location of the storage reservoir, which first and second location are chosen such that during operation of the pump a circulation, flow and/or whirl (13) of the blasting fluid in and/or through the storage reservoir is achieved, such that the blasting fluid in the storage reservoir keeps a mainly homogeneous constitution.

3. System according to claim 1 - 2, wherein the second pumping circuit and the third pumping circuit comprise a common pump (7).

4. System according to any preceding claim, wherein the collecting means comprise a fourth pumping circuit (PS4), arranged for circulating and/or keeping in motion the blasting fluid in the collection reservoir such that settling of the abrasive in the collection reservoir is mainly prevented.

5. System according to claim 4, wherein the fourth pumping circuit comprises a pump (10) of which an inlet is connected at a first location of the collection reservoir and an outlet at a second location of that collection reservoir, which first and second location are chosen such that during operation of the pump a circulation and/or whirl (15) of the blasting fluid is achieved in and/or through the collection reservoir.

6. System according to claim 5, wherein the first pumping circuit and the fourth pumping circuit comprise a common pump (10).

7. System according to any preceding claim, wherein the collecting means comprise a fifth pumping circuit (PS5), arranged for circulating and/or keeping in motion the blasting fluid via the collecting floor such that settling of the abrasive to the collecting floor is prevented, preferably the fifth pumping circuit comprises one or more spraying devices (18) for pouring out blasting fluid and/or transport liquid via the collecting floor.

8. System according to any preceding claim, comprising liquid draining means arranged for separating and feeding back to the system from a surplus of blasting fluid at least a substantial part of the abrasive material of that surplus and for draining the remaining transport liquid.

9. System according to claim 8, wherein the liquid draining means comprise a sixth pumping circuit (PS6), arranged for, under control of a sensor (21), e.g. a level sensor, pumping a surplus of blasting fluid to separation means (22-25), e.g. a set of cyclone separators (22), which are arranged for separating and feeding back to the system, via the sixth pumping circuit, at least a substantial part of the abrasive material of that surplus and for draining the remaining liquid.

10. System according to any preceding claim, comprising a blasting room (1) which is provided with the collecting floor (3) and connections (8, 9) for blasting fluid and gas or gas mixture suitable to connect the blasting head (2), and further arranged to place in it an object to be blasted, wherein the blasting room comprises a sliding door construction (33) which is arranged to open and close the front or side, as well as the top side of the blasting room such that it is facilitated to move objects to be blasted into and out of the blasting room via its front or side respectively, and/or its upper side.

11. Method for blasting objects, via at least one blasting head, with a blasting medium, using a system according to any of claims 1 to 10, the method comprising:
- providing a blasting fluid comprising a mixture of a transport liquid, e.g. water, and an abrasive material which is mainly not soluble in that transport liquid;
- supplying said blasting fluid to a relevant blasting head and supplying pressurized gas or gas mixture to the blasting head and combining the pressurized gas or gas mixture with the blasting fluid to form said blasting medium;
- first treating an object to be blasted with the blasting medium, wherein the pressurized gas or gas mixture is under a first pressure; and
- subsequently treating the object to be blasted with the blasting medium, while lowering the pressure of the pressurized gas or gas mixture to a second pressure which is lower than the first pressure.

12. Method according to claim 11, wherein the pressurized gas or gas mixture is a gas or a gas mixture under high pressure, preferably compressed air.

13. Method according to claim 11 or 12, wherein the pressure of the compressed air is lowered gradually or in steps.

14. Method according to any one of claims 11 - 13, wherein, with the step of lowering the pressure of the compressed air, the pressure of the blasting fluid is raised.

15. Method according to any one of claims 11 - 14, wherein the blasting fluid comprises more than 40%, preferably between 70% and 90% and more preferably about 80% abrasive material.

## Patentansprüche

1. System zum Strahlen von Objekten über mindestens einen Strahlkopf mit einem Strahlmedium, das durch ein Strahlfluid festgelegt ist, das eine Mischung aus einer Transportflüssigkeit, z.B. Wasser, und aus einem Schleifmittelmaterial, das in dieser Transportflüssigkeit im Wesentlichen nicht löslich ist, umfasst, wobei das Strahlfluid mehr als 40 %, vorzugsweise zwischen 70 % und 90 %, und stärker bevorzugt etwa 80 % Schleifmittel umfasst, wobei das Strahlfluid einem entsprechenden Strahlkopf über einen Strahlfluideinlass zugeführt wird und wobei außerdem Gas oder eine Gasmischung unter einem hohen Druck dem Strahlkopf über einen Gaseinlass zugeführt wird, wobei das Gas mit dem Strahlfluid kombiniert wird, um auf diese Weise das Strahlmedium festzulegen, wobei das Strahlmedium mit Druck auf das Objekt gespritzt wird, wobei das Strahlfluid über Sammelmittel gesammelt und in Speichermitteln gespeichert wird, um erneut zum Strahlen verwendet zu werden, wobei
- die Sammelmittel einen Sammelboden (3) und einen Sammelbehälter (5) enthalten, wobei der Sammelboden angeordnet ist, um das Strahlfluid zu sammeln und um das gesammelte Strahlfluid zu dem Sammelbehälter zu transportieren,
- die Speichermittel einen Speicherbehälter (6) und Homogenisierungsmittel enthalten, um ein Strahlfluid mit einer im Wesentlichen homogenen und konstanten Beschaffenheit zu speichern und/oder zuzuführen,
- ein erster Pumpenkreis (PS1) bereitgestellt und angeordnet ist, um das gesammelte Strahlfluid zu dem Speicherbehälter zu pumpen, und
- ein zweiter Pumpenkreis (PS2) bereitgestellt und angeordnet ist, um das im Wesentlichen homogene Strahlfluid aus dem Speicherbehälter zu dem mindestens einen Strahlkopf zu pumpen,
- wobei die Speichermittel einen dritten Pumpenkreis (PS3) umfassen, der angeordnet ist, um das Strahlfluid in dem Speicherbehälter derart im Umlauf zirkulieren zu lassen und/oder in Bewegung zu halten, dass das Strahlfluid in dem Speicherbehälter eine im Wesentlichen homogene Beschaffenheit behält.

2. System nach Anspruch 1, wobei der dritte Pumpenkreis (PS3) eine Pumpe (7) umfasst, deren Einlass mit einem ersten Ort des Speicherbehälters und deren Auslass mit einem zweiten Ort des Speicherbehälters verbunden sind, wobei der erste und der zweite Ort derart sind, dass während des Betriebs der Pumpe eine Zirkulation, eine Strömung und/oder ein Wirbel (13) des Strahlfluids in dem und/oder durch den Speicherbehälter erreicht wird, derart, dass das Strahlfluid in dem Speicherbehälter eine im Wesentlichen homogene Beschaffenheit behält.

3. System nach Anspruch 1 bis 2, wobei der zweite Pumpenkreis und der dritte Pumpenkreis eine gemeinsame Pumpe (7) umfassen.

4. System nach einem vorhergehenden Anspruch, wobei die Sammelmittel einen vierten Pumpenkreis (PS4) umfassen, der angeordnet ist, um das Strahlfluid in dem Sammelbehälter derart im Umlauf zirkulieren zu lassen und/oder in Bewegung zu halten, dass ein Absetzen des Schleifmittels in dem Sammelbehälter im Wesentlichen verhindert wird.

5. System nach Anspruch 4, wobei der vierte Pumpenkreis eine Pumpe (10) umfasst, deren Einlass mit einem ersten Ort des Sammelbehälters und deren Auslass mit einem zweiten Ort des Sammelbehälters verbunden sind, wobei der erste und der zweite Ort derart gewählt sind, dass während des Betriebs der Pumpe eine Zirkulation und/oder ein Wirbel (15) des Strahlfluids in dem und/oder durch den Sammelbehälter erreicht wird.

6. System nach Anspruch 5, wobei der erste Pumpenkreis und der vierte Pumpenkreis eine gemeinsame Pumpe (10) umfassen.

7. System nach einem vorhergehenden Anspruch, wobei die Sammelmittel einen fünften Pumpenkreis (PS5) umfassen, der angeordnet ist, um das Strahlfluid über den Sammelboden derart im Umlauf zirkulieren zu lassen und/oder in Bewegung zu halten, dass ein Absetzen des Schleifmittels auf dem Sammelboden verhindert wird, wobei vorzugsweise der fünfte Pumpenkreis ein oder mehrere Sprühvorrichtungen (18) umfasst, um Strahlfluid und/oder Transportflüssigkeit über den Sammelboden auszugießen und ausströmen zu lassen.

8. System nach einem vorhergehenden Anspruch, das Mittel für einen Flüssigkeitsabfluss umfasst, die angeordnet sind, um aus einem Überschuss an Strahlfluid mindestens einen wesentlichen Teil des Schleifmittelmaterials dieses Überschusses abzutrennen und dem System zurückzuführen und um die verbleibende restliche Transportflüssigkeit abfließen zu lassen.

9. System nach Anspruch 8, wobei das Mittel für einen Flüssigkeitsabfluss einen sechsten Pumpenkreis (PS6) umfasst, der angeordnet ist, um unter der Steuerung eines Sensors (21), z.B. eines Pegelsensors, einen Überschuss von Strahlfluid an Trennmittel (22-25), z.B. an einen Satz von Zyklonabscheidern (22), zu pumpen, wobei diese Abscheider angeordnet sind, um über den sechsten Pumpenkreis mindestens einen wesentlichen Teil des Schleifmittelmaterials des Überschusses abzutrennen und dem System zurückzuführen und um die verbleibende restliche Transportflüssigkeit abfließen zu lassen.

10. System nach einem vorhergehenden Anspruch, das einen Strahlraum (1) umfasst, der mit dem Sammelboden (3) und mit Verbindungen (8, 9) für ein Strahlfluid und für ein Gas oder eine Gasmischung versehen ist, wobei die Verbindungen (8, 9) geeignet sind, sich mit dem Strahlkopf (2) zu verbinden, und wobei der Strahlraum (1) ferner angeordnet ist, um darin ein Objekt, das bestrahlt werden soll, anzuordnen, wobei der Strahlraum eine Schiebetürkonstruktion (33) umfasst, die angeordnet ist, um sowohl die Vorderseite oder die Seite als auch die Oberseite des Strahlraums derart zu öffnen und zu schließen, dass es dadurch erleichtert wird, Objekte, die bestrahlt werden sollen, über seine Vorderseite bzw. über seine Seite und/oder über seine Oberseite in den Strahlraum hinein- und aus diesem herauszubewegen.

11. Verfahren zum Strahlen von Objekten über mindestens einen Strahlkopf mit einem Strahlmedium unter Verwendung eines Systems nach einem der Ansprüche 1 bis 10, wobei das Verfahren umfasst:
- Bereitstellen eines Strahlfluids, das eine Mischung aus einer Transportflüssigkeit, z.B. Wasser, und aus einem Schleifmittelmaterial, das in dieser Transportflüssigkeit im Wesentlichen nicht löslich ist, umfasst;
- Zuführen des Strahlfluids zu einem entsprechenden Strahlkopf und Zuführen eines unter Druck stehenden Gases oder einer entsprechenden Gasmischung zu dem Strahlkopf und Kombinieren des unter Druck stehenden Gases oder der entsprechenden Gasmischung mit dem Strahlfluid, um das Strahlmedium zu bilden;
- zuerst Behandeln eines Objektes, das mit dem Strahlmedium bestrahlt werden soll, wobei sich das unter Druck stehende Gas oder die entsprechende Gasmischung unter einem ersten Druck befindet; und
- anschließend Behandeln des Objektes, das mit dem Strahlmedium bestrahlt werden soll, während der Druck des unter Druck stehenden Gases oder der entsprechenden Gasmischung auf einen zweiten Druck, der niedriger als der erste Druck ist, abgesenkt wird.

12. Verfahren nach Anspruch 11, wobei das unter Druck stehende Gas oder die entsprechende Gasmischung ein Gas oder eine Gasmischung unter einem hohen Druck ist, vorzugsweise Druckluft.

13. Verfahren nach Anspruch 11 oder 12, wobei der Druck der Druckluft graduell oder in Schritten gesenkt wird.

14. Verfahren nach einem der Ansprüche 11 bis 13, wobei mit dem Schritt des Absenkens des Drucks der Druckluft der Druck des Strahlfluids erhöht wird.

15. Verfahren nach einem der Ansprüche 11 bis 14, wobei das Strahlfluid mehr als 40 %, vorzugsweise zwischen 70 % und 90 %, und stärker bevorzugt etwa 80 % Schleifmittelmaterial umfasst.

## Revendications

1. Système pour sabler des objets, par l'intermédiaire d'au moins une tête de sablage, à l'aide d'un milieu de sablage qui est constitué par un fluide de sablage contenant un mélange d'un liquide de transport, par exemple l'eau, et d'une matière abrasive qui n'est principalement pas soluble dans ce liquide de transport, dans lequel le fluide de sablage contient plus de 40 %, de préférence entre 70 % et 90 %, et mieux encore environ 80 % de matière abrasive, dans lequel le fluide de sablage est fourni à une tête de sablage appropriée par l'intermédiaire d'une entrée de fluide de sablage et dans lequel, en outre, un gaz d'un mélange gazeux à haute pression est fourni à la tête de sablage par l'intermédiaire d'une entrée de gaz, ledit gaz étant combiné au fluide de sablage pour constituer ainsi le milieu de sablage, dans lequel le milieu de sablage est projeté avec force sur l'objet, dans lequel le fluide de sablage est collecté par l'intermédiaire de moyens de collecte et est stocké dans des moyens de stockage en vue d'être à nouveau utilisé pour un sablage, dans lequel:
- les moyens de collecte comprennent un plancher de collecte (3) et un réservoir de collecte (5), dans lequel le plancher de collecte est agencé de manière à collecter le fluide de sablage et à transporter le fluide de sablage collecté jusqu'au réservoir de collecte,
- les moyens de stockage comprennent un réservoir de stockage (6) ainsi que des moyens d'homogénéisation pour stocker et/ou fournir un fluide de sablage présentant une constitution principalement homogène et constante,
- un premier circuit de pompage (PS1) est prévu et agencé de manière à pomper le fluide de sablage collecté en direction du réservoir de stockage, et
- un deuxième circuit de pompage (PS2) est prévu et agencé de manière à pomper le fluide de sablage principalement homogène à partir du réservoir de stockage jusqu'à ladite au moins une tête de sablage,
dans lequel les moyens de stockage comprennent un troisième circuit de pompage (PS3) agencé de manière à faire circuler et/ou à maintenir en mouvement le fluide de sablage dans le réservoir de stockage, de telle sorte que le fluide de sablage dans le réservoir de stockage conserve une constitution principalement homogène.

2. Système selon la revendication 1, dans lequel le troisième circuit de pompage (PS3) comprend une pompe (7) dont l'entrée est connectée à un premier endroit du réservoir de stockage et une sortie à un deuxième endroit du réservoir de stockage, lesdits premier et deuxième endroits étant choisis de telle sorte que, pendant le fonctionnement de la pompe, une circulation, un écoulement et/ou un tourbillonnement (13) du fluide de sablage dans et/ou à travers le réservoir de stockage soit réalisé, de telle sorte que le fluide de sablage dans le réservoir de stockage conserve une constitution principalement homogène.

3. Système selon les revendications 1 et 2, dans lequel le deuxième circuit de pompage et le troisième circuit de pompage comprennent une pompe commune (7).

4. Système selon l'une quelconque des revendications précédentes, dans lequel les moyens de collecte comprennent un quatrième circuit de pompage (PS4) qui est agencé de manière à faire circuler et/ou à maintenir un mouvement le fluide de sablage dans le réservoir de stockage, de telle sorte qu'une sédimentation de l'abrasif dans le réservoir de collecte soit principalement empêchée.

5. Système selon la revendication 4, dans lequel le quatrième circuit de pompage comprend une pompe (10) dont une entrée est connectée à un premier endroit du réservoir de collecte et une sortie à un deuxième endroit de ce réservoir de collecte, dans lequel lesdits premier et deuxième endroits sont choisis de telle sorte que, pendant le fonctionnement de la pompe, une circulation et/ou un tourbillonnement (15) du fluide de sablage soit réalisé dans et/ou à travers le réservoir de collecte.

6. Système selon la revendication 5, dans lequel le premier circuit de pompage et le quatrième circuit de pompage comprennent une pompe commune (10).

7. Système selon l'une quelconque des revendications précédentes, dans lequel les moyens de collecte comprennent un cinquième circuit de pompage (PS5) qui est agencé de manière à faire circuler et/ou à maintenir en mouvement le fluide de sablage par l'intermédiaire du plancher de collecte de telle sorte qu'une sédimentation de l'abrasif sur le plancher de collecte soit empêchée, le cinquième circuit de pompage comprenant de préférence un ou plusieurs dispositif (s) de pulvérisation (18) pour déverser le fluide de sablage et/ou le liquide de transport par l'intermédiaire du plancher de collecte.

8. Système selon l'une quelconque des revendications précédentes, comprenant des moyens de drainage de liquide agencés pour séparer et renvoyer vers le système à partir d'un surplus de fluide de sablage au moins une partie substantielle de la matière abrasive de ce surplus et pour drainer le liquide de transport restant.

9. Système selon la revendication 8, dans lequel les moyens de drainage de liquide comprennent un sixième circuit de pompage (PS6) qui est agencé de manière à, sous le contrôle d'un capteur (21), par exemple un capteur de niveau, pomper un surplus de fluide de sablage vers des moyens de séparation (22-25), par exemple un ensemble de séparateurs à cyclone (22) qui sont agencés de manière à séparer et à renvoyer vers le système, par l'intermédiaire du sixième circuit de pompage, au moins une partie substantielle de la matière abrasive de ce surplus et à drainer le liquide restant.

10. Système selon l'une quelconque des revendications précédentes, comprenant une chambre de sablage (1) qui est pourvue du plancher de collecte (3) et de connexions (8, 9) pour un fluide de sablage et un gaz ou un mélange gazeux approprié pour une connexion à la tête de sablage (2), et agencé en outre de manière à placer dans celle-ci un objet à sabler, dans lequel la chambre de sablage comprend une structure de porte coulissante (33) qui est agencée de manière à ouvrir et à fermer le côté avant ou le côté latéral ainsi que le côté supérieur de la chambre de sablage de telle sorte que le déplacement d'objets à sabler dans et hors de la chambre de sablage soit facilité par l'intermédiaire de son côté avant ou latéral, respectivement, et/ou de son côté supérieur.

11. Procédé pour sabler des objets, par l'intermédiaire d'au moins une tête de sablage, à l'aide d'un milieu de sablage, en utilisant un système selon l'une quelconque des revendications 1 à 10, le procédé comprenant les étapes suivantes:
- fournir un fluide de sablage contenant un mélange d'un liquide de transport, par exemple l'eau, et d'une matière abrasive qui n'est principalement pas soluble dans ce liquide de transport;
- fournir ledit fluide de sablage à une tête de sablage appropriée et fournir un gaz ou un mélange gazeux pressurisé à la tête de sablage et combiner le gaz ou le mélange gazeux pressurisé avec le fluide de sablage de manière à former ledit milieu de sablage;
- traiter en premier lieu un objet à sabler avec le milieu de sablage, dans lequel le gaz ou le mélange gazeux pressurisé se trouve à une première pression; et
- traiter ensuite l'objet à sabler avec le milieu de sablage, tout en abaissant la pression du gaz ou du mélange gazeux pressurisé à une deuxième pression qui est inférieure à la première pression.

12. Procédé selon la revendication 11, dans lequel le gaz ou le mélange gazeux pressurisé est un gaz ou un mélange gazeux sous une pression élevée, de préférence de l'air comprimé.

13. Procédé selon la revendication 11 ou 12, dans lequel la pression de l'air comprimé est abaissée graduellement ou par étapes.

14. Procédé selon l'une quelconque des revendications 11 à 13, dans lequel avec l'étape de diminution de la pression de l'air comprimé, la pression du fluide de sablage est augmentée.

15. Procédé selon l'une quelconque des revendications 11 à 14, dans lequel le fluide de sablage contient plus de 40 %, de préférence entre 70 % et 90 %, et mieux encore environ 80 % de matière abrasive.
